# EUROPÄISCHE PATENTSCHRIFT

(11) **EP 1 625 060 B1**
(45) Veröffentlichungstag und Bekanntmachung des Hinweises auf die Patenterteilung: **28.02.2007**
(21) Anmeldenummer: 04741547.6
(22) Anmeldetag: 11.05.2004
(51) Int. Cl.: B60T 13/567

(54) **GEHÄUSEMODUL FÜR EINEN BREMSKRAFTVERSTÄRKER**
HOUSING MODULE FOR A BRAKE BOOSTER
MODULE BOITIER D'UN FREIN ASSISTE

(30) Priorität: 14.05.2003 DE 10321780; 17.12.2003 DE 10359175
(43) Veröffentlichungstag der Anmeldung: 15.02.2006
(73) Patentinhaber: Continental Teves AG & Co. oHG, 60488 Frankfurt am Main (DE)
(72) Erfinder: FALLER, Jürgen, 63796 Kahl (DE); WEISS, Andreas, 61449 Steinbach/Ts. (DE)
(86) Internationale Anmeldenummer: PCT/EP2004/050760
(87) Internationale Veröffentlichungsnummer: WO 2004/101341

(56) Entgegenhaltungen:
- EP-A- 0 104 105
- DE-A- 2 845 794
- DE-A- 2 918 910
- US-A- 4 271 750
- US-A- 4 433 614
- US-A- 5 014 597

## Beschreibung

Die Erfindung betrifft ein Gehäusemodul für einen Bremskraftverstärker umfassend zwei Gehäusehalbschalen zur Aufnahme einer beweglichen Wand, welche einen Innenraum des Bremskraftverstärkers in eine Unterdruckkammer und eine Arbeitskammer unterteilt, sowie zur Aufnahme eines Steuergehäuses, in dem ein eine auf die bewegliche Wand einwirkende Druckdifferenz steuerndes, mittels einer Betätigungsstange betätigbares Steuerventil angeordnet ist, das aus zwei konzentrisch zueinander angeordneten Dichtsitzen sowie einem elastisch verformbaren Ventilkörper besteht.

Es ist allgemein bekannt, das Gehäuse eines Bremskraftverstärkers aus zwei Gehäusehalbschalen gleichen Werkstoffes aufzubauen.
Aus der DE 28 45 794 A1 ist beispielsweise ein Bremskraftverstärker für ein Kraftfahrzeug bekannt, welcher ein Gehäuse bestehend aus zwei Gehäuseschalen aufweist, wobei beide Gehäuseschalen aus einem Kunststoff ausgebildet sind.
Bekannt ist auch der Aufbau des Gehäuses eines Bremskraftverstärkers aus zwei Gehäusehalbschalen aus Metall. Da das Gehäuse die bekannten Bauteile eines Bremskraftverstärkers aufnehmen muss und eine Abdichtung der einzelnen Bauteile erforderlich ist, ist der Montageaufwand bekanntermaßen dementsprechend hoch.

Aus der EP 0 104 105 A1 ist ein Bremskraftverstärker mit einem Gehäuse bekannt, welches eine Gehäusehalbschale aus Metall und eine Gehäusehalbschale aus Kunststoff aufweist.

Daher ist es die Aufgabe der Erfindung, ein Gehäusemodul für einen Bremskraftverstärker der angegebenen Art dahingehend zu verbessern, dass die Montage des Bremskraftverstärkers vereinfacht wird.

Diese Aufgabe wird erfindungsgemäß dadurch gelöst, dass die dem Steuerventilzugewandte Gehäusehalbschale aus mehreren Bauteilen unter Verwendung von wenigstens einem Metallgehäuseteil sowie wenigstens einem Kunststoffgehäuseteil besteht wobei an das Kunststoffgehäuseteil ein Dichtungselement zur Abdichtung des Steuergehäuses angeformt ist. Dieser mehrteilige Aufbau der Gehäusehalbschale ermöglicht eine Vereinfachung der Montage durch ein Kombinieren mehrerer Funktionen. Zusätzlich wird die Herstellung des Metallgehäuseteiles durch die weniger aufwendige Ausgestaltung vereinfacht.

Beispielsweise ist das Dichtungselement zur Abdichtung des Steuergehäuses durch Anvulkanisieren angeformt. Bei bekannten Bremskraftverstärkern ist dieses als Gleitdichtung ausgeführtes Dichtungselement als ein weiteres, separates Bauteil ausgeführt, wodurch die Montage des Dichtungselementes einen hohen Montageaufwand erfordert. Durch die Anformung des Dichtungselementes an dem Kunststoffgehäuseteil entfällt dieser. Des weiteren kann das Dichtungselement durch die Anformung an dem Kunststoffgehäuseteil mit einem größeren Dichtdurchmesser ausgebildet werden, wodurch Kanäle des Steuergehäuses vergrößert werden können. Dadurch ist es möglich, Ansprechund Lösezeit des Bremskraftverstärkers zur verbessern.

Vorzugsweise sind das Kunststoffgehäuseteil und das Metallgehäuseteil mittels einer Bajonettverbindung miteinander verbindbar, wodurch die beiden Gehäuseteile mit geringem Aufwand montierbar sind. Denkbar sind im Rahmen der Erfindung jedoch auch andere Verbindungsarten wie beispielsweise eine Rastverbindung.

Gemäß einer vorteilhaften Weiterbildung der Erfindung ist an das Kunststoffgehäuseteil zur Abdichtung gegen das Metallgehäuseteil eine Dichtung angeformt, welche den Bremskraftverstärker vor einem Eindringen von Feuchtigkeit aus einem Motorraum eines Kraftfahrzeuges schützt. Die Montage einer separaten Dichtung entfällt. Das Anformen der Dichtung an dem Kunststoffgehäuseteil erfolgt beispielsweise durch Anvulkanisieren.

Zur Abdichtung gegen eine fahrzeugfeste Wand eines Kraftfahrzeuges ist an das Kunststoffgehäuseteil eine weitere Dichtung angeformt, wodurch die Montage einer separaten Dichtung nicht mehr erforderlich ist. Die Dichtung kann beispielsweise durch Anvulkanisieren an das Kunststoffgehäuseteil angeformt werden.

Gemäß einer vorteilhaften Weiterbildung der Erfindung ist an dem Kunststoffgehäuseteil eine Anlagefläche für ein Querglied vorgesehen, welches die axiale Beweglichkeit eines mit der Betätigungsstange verbundenen Ventilkolbens gegenüber dem Steuergehäuse begrenzt. Das Kunststoffgehäuseteil erfüllt damit gleichzeitig mehrere Funktionen.

Das Kunststoffgehäuseteil weist gemäß einer vorteilhaften Ausführungsform der Erfindung einen ersten zylindrischen Abschnitt mit einem ersten Innendurchmesser sowie einen zweiten zylindrischen Abschnitt mit einem zweiten Innendurchmesser auf, wobei der erste Innendurchmesser größer als der zweite Innendurchmesser ist und dadurch auf einer Innenseite des Kunststoffgehäuseteiles eine umlaufende Stufe ausgebildet ist, welche als Anschlagfläche für das Querglied dient.

In vorteilhafter Weiterbildung der Erfindung bedeckt der Werkstoff des Dichtungselementes die umlaufende Stufe, welche als Anschlagfläche für das Querglied dient. Der Werkstoff des Dichtungselementes, beispielsweise ein Gummiwerkstoff, dient so der Reduzierung der Anschlaggeräusche des Quergliedes an der Anschlagfläche.

Gemäß einer weiteren vorteilhaften Ausführungsform der Erfindung weist das Kunststoffgehäuseteil ein erstes Bauteil zur Verbindung mit dem Metallgehäuseteil sowie ein zweites Bauteil auf, wobei das Dichtungselement zur Abdichtung des Steuergehäuses und die Anschlagfläche an dem zweiten Bauteil vorgesehen sind und das zweite Bauteil derart an dem ersten Bauteil befestigbar ist, dass eine relative axiale Lageänderung des zweiten Bauteiles in Bezug auf das erste Bauteil möglich ist. Somit ist es möglich, die Position, an welcher das Querglied an dem Kunststoffgehäuseteil anschlägt, einzustellen, wodurch beispielsweise Leerwege eines sich an dem Bremskraftverstärker anschließenden Hauptbremszylinders reduziert werden können. Die Befestigung des zweiten Bauteiles, welche die axiale Lageänderung ermöglicht, ist beispielsweise mittels einer Gewindeverbindung realisierbar.

Weist der Bremskraftverstärker wenigstens einen Zuganker auf, dessen aus dem Gehäusemodul hervorstehende Enden jeweils einen Befestigungsabschnitt zur Verbindung des Bremskraftverstärkers mit einem Hauptbremszylinder und einer fahrzeugfesten Wand eines Kraftfahrzeuges aufweist, durchgreift gemäß einer vorteilhaften Ausführungsform der Erfindung ein Ende des Zugankers zur Verdrehsicherung des Zugankers und zur Sicherung des Kunststoffgehäuseteiles das Metallgehäuseteil sowie das Kunststoffgehäuseteil. Das Kunststoffgehäuseteil kann dadurch Drehmomente, welche beispielsweise bei der Montage des Gehäusemoduls auftreten, aufnehmen. Zusätzliche Versteifungselemente im Metallgehäuseteil können dadurch entfallen.

Vorzugsweise ist ein Faltenbalg, welcher einen aus dem Gehäusemodul herausragenden Teil des Steuergehäuses umgibt, an einer umlaufenden Nut oder einem umlaufenden Bund des Kunststoffgehäuseteiles befestigbar.

Eine Reduzierung der Einzelteile ergibt sich gemäß einer vorteilhaften Weiterbildung der Erfindung dadurch, dass der Faltenbalg und das Kunststoffteil einstückig ausgebildet sind.

Nachstehend wird die Erfindung anhand der Zeichnung erläutert, welche Ausführungsformen zeigt. Es zeigt jeweils stark schematisiert:

Es zeigen:
- Figur 1: eine Teilansicht einer ersten Ausführungsform eines erfindungsgemäßen Gehäusemoduls eines Bremskraftverstärkers im Längsschnitt und
- Figur 2: eine Teilansicht einer zweiten Ausführungsform eines erfindungsgemäßen Gehäusemoduls eines Bremskraftverstärkers im Längsschnitt.

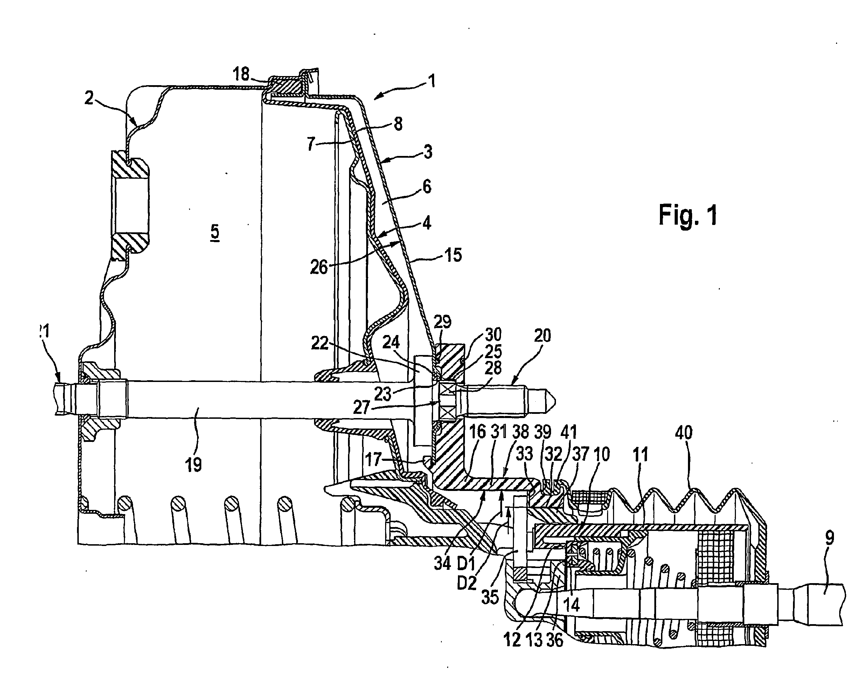

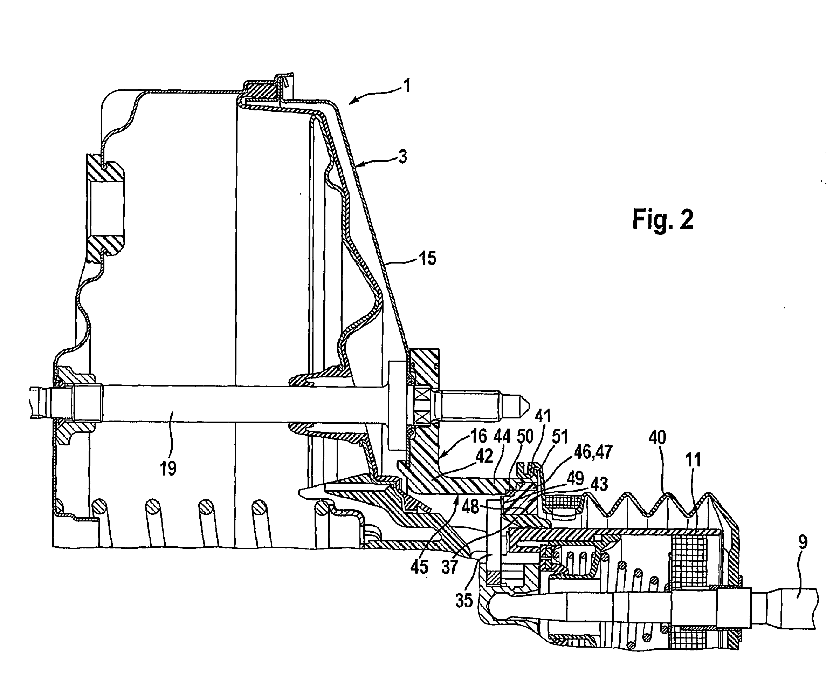

Die Fig. 1 und 2 zeigen in einer skizzenhaften Teilansicht lediglich die für die Erfindung wesentlichen Teile eines Gehäusemoduls eines pneumatischen Bremskraftverstärkers.

Fig. 1 zeigt eine erste Ausführungsform eines Gehäusemoduls 1 eines pneumatischen Bremskraftverstärkers, welches zwei Gehäusehalbschalen 2,3 aufweist. Ein durch die Gehäusehalbschalen 2,3 gebildeter Innenraum des Bremskraftverstärkers ist durch eine axial bewegliche Wand 4 in eine Unterdruckkammer 5 und eine Arbeitskammer 6 untereilt. Die axial bewegliche Wand 4 besteht aus einem aus Blech tiefgezogenen Membranteller 7 und einer daran anliegenden flexiblen Membran 8, welche zwischen dem äußeren Umfang des Membrantellers 7 um dem Gehäusemodul 1 eine Rollmembran als Abdichtung bildet.

Ein durch eine Betätigungsstange 9 betätigbares Steuerventil 10 ist in einem in der Gehäusehalbschale 3 dichtend geführten, die bewegliche Wand 4 tragenden Steuergehäuse 11 untergebracht und besteht aus zwei konzentrisch zueinander angeordneten Dichtsitzen 12,13 sowie einem elastisch verformbaren Ventilkörper 14. Auf weitere Einzelheiten der in Fig. 1 dargestellten Teilansicht, welche nicht erfindungswesentlich sind, braucht nicht weiter eingegangen zu werden, da der Aufbau und die Funktion eines derartigen Bremskraftverstärkers allgemein bekannt sind.

Wie aus Fig. 1 ersichtlich ist, besteht die Gehäusehalbschale 3 aus einem Metallgehäuseteil 15 sowie einem Kunststoffgehäuseteil 16. Die Gehäusehalbschale 2 dagegen ist einteilig ausgestaltet.
Das Metallgehäuseteil 15 ist durch umformtechnische Maßnamen mit der aus Metall ausgebildeten Gehäusehalbschale 2 verpresst, wobei ein Ende 18 der Membran 8 zwischen der Gehäusehalbschale 2 und dem Metallgehäuseteil 15 befestigt ist. Zur Verbindung der beiden Gehäuseteile 15,16 weist das Kunststoffgehäuseteil 15 Vorsprünge 17 auf, welche das Metallgehäuseteil 15 in Form einer Bajonettverbindung umgreifen.

Der Bremskraftverstärker verfügt über mindestens ein Zuganker 19, welcher das Gehäusemodul 1 sowie die bewegliche Wand 4 dichtend durchgreift und mit Enden 20,21 aus dem Gehäusemodul 1 hinausragt.

Das aus der Gehäusehalbschale 2 herausragende Ende 21 des Zugankers 19 dient der Befestigung eines nicht gezeichneten Hauptbremszylinders, welcher mit einem Flansch gegen eine plane Stirnfläche der einteiligen Gehäusehalbschale 2 angepresst wird. Das Ende 20 des Zugankers 19 dient der Anordnung des Bremskraftverstärkers an einer nicht gezeigten fahrzeugfesten Wand eines Kraftfahrzeugs, der sogenannten Spritzwand, und ragt durch eine Ausnehmung 23 des Metallgehäuseteiles 15 hindurch. Zur Festlegung der Position des Zugankers 19 im Gehäusemodul 1 weist dieser einen umlaufenden Bund 22 auf, welcher an einer Innenseite 26 des Metallgehäuseteiles 15 anliegt. Zur Abdichtung ist zwischen dem Bund 22 und der Innenseite 26 des Metallgehäuseteils 15 ein ringförmiges Dichtelement 24 vorgesehen. Auf der anderen Seite der Spitzwand, ist ein nicht dargestellter Pedalbock angeordnet, durch den das Ende 20 des Zugankers 19 ebenfalls greift, um schließlich beispielsweise mit einer Mutter, derart verschraubt zu werden, dass die gewünschte Befestigung der Bremskraftverstärker-Hauptbremszylindereinheit an dem Fahrzeug bewerkstelligt ist.

Aus Fig. 1 ist ersichtlich, dass sich das Kunststoffgehäuseteil 16 und das Metallgehäuseteil 15 im Bereich des Zugankers 19 überlappen und dass der Zuganker 19 ebenfalls eine Ausnehmung 25 des Kunststoffgehäuseteiles 16 durchgreift.

Ein sich an den Bund 22 in Richtung des Endes 20 anschließender Abschnitt 27 ist mit Vierkantflächen 28 versehen, welche mit der Ausnehmung 25 des Kunststoffgehäuseteiles 16 eine formschlüssige Verbindung ermöglichen. Diese formschlüssige Verbindung dient der Verdrehsicherung des Zugankers 19 sowie der Sicherung der Bajonettverbindung zwischen dem Metallgehäuseteil 15 und dem Kunststoffgehäuseteil 16.

Zur Abdichtung des Kunststoffgehäuseteiles 16 gegen das Metallgehäuseteil 15 ist auf einer an dem Metallgehäuseteil 15 anliegenden Seite des Kunststoffgehäuseteiles 16 eine Dichtung 29 beispielsweise durch Anvulkanisieren in eine Ausnehmung angeformt. Auf einer an der Spitzwand anliegenden Seite ist in dem Kunststoffgehäuseteil 16 eine weitere Dichtung 30 vorgesehen, welche der Abdichtung des Kunststoffgehäuseteiles 16 gegen die Spitzwand dient. Der Bremskraftverstärker wird hierdurch gegen aus dem Motorraum des Fahrzeuges eindringende Feuchtigkeit geschützt. Die Dichtungen 29,30 sind durch die Anformung an das Kunststoffgehäuseteil 16 unverlierbar mit diesem verbunden, wodurch separate Dichtungen entfallen können. Die Montage des Bremskraftverstärkers wird so erleichtert.

Das Kunststoffgehäuseteil 16 weist einen ersten zylindrischen Abschnitt 31 mit einem ersten Innendurchmesser D1 und einen zweiten zylindrischen Abschnitt 32 mit einem zweiten Innendurchmesser D2 auf, wobei der erste Innendurchmesser D1 größer ausgestaltet ist als der zweite Innendurchmesser D2. Auf einer Innenseite 34 des Kunststoffgehäuses 16 entsteht hierdurch eine umlaufende Stufe 33, welche einem Querglied 35 als Anlagefläche dient. Das Querglied 35 begrenzt die axiale Beweglichkeit eines mit der Betätigungsstange 9 verbundenen Ventilkolbens 36 gegenüber dem Steuergehäuse 11.

Im Bereich des zweiten zylindrischen Abschnittes 32 ist auf der Innenseite 34 des Kunststoffgehäuseteiles 16 ein als Gleitdichtung ausgebildetes Dichtungselement 37 beispielsweise durch Anvulkanisieren angeformt und dient der Abdichtung des Kunststoffgehäuseteiles 16 gegen das Steuergehäuse 11. Das Dichtungselement 37 ist dabei derart an dem Kunststoffgehäuseteil 16 angeformt, dass eine dünne Sicht des Werkstoffes des Dichtungselements 37 auch die Stufe 33 bedeckt. Die Anschlaggeräusche des Quergliedes 35 an der Stufe 33 werden dadurch gedämpft.

Weiter ist auf einer Außenseite 38 des Kunststoffgehäuseteiles 16 im Bereich des zweiten zylindrischen Abschnittes 32 eine umlaufende Nut 39 vorgesehen, welche der Befestigung eines Faltenbalges 40 dient. Der Faltenbalg 40 umgibt einen aus dem Gehäusemodul 1 herausragenden Teil des Steuergehäuses 11 und ist mittels eines umlaufenden Bundes 41 in der umlaufenden Nut 39 befestigt. Auf die Funktion und den Aufbau des Faltenbalges 40 wird hier nicht weiter eingegangen, da der Faltenbalg 40 allgemein bekannt ist.
Um den Aufbau des Bremskraftverstärkers noch weiter zu vereinfachen, ist es jedoch denkbar, den Faltenbalg 40 und das Kunststoffgehäuseteil 16 als ein Bauteil auszugestalten.

Die in Fig. 2 dargestellte zweite Ausführungsform eines Gehäusemoduls unterscheidet sich zu der ersten Ausführungsform gemäß Fig. 1 lediglich in der Ausgestaltung des Kunststoffgehäuseteiles 16.

Das Kunststoffgehäuseteil 16 besteht aus einem ersten Bauteil 42, welches wie gemäß Fig. 1 beschrieben der Verbindung mit dem Metallgehäuseteil 15 sowie der Verdrehsicherung des Zugankers 19 und der Sicherung der Bajonettverbindung dient, und einem zweiten ringförmigen Bauteil 43. Das erste Bauteil 42 weist einen zylindrischen Abschnitt 44 auf, wobei an einem Ende des zylindrischen Abschnittes 44 auf einer Innenseite 45 ein Gewindeabschnitt 46 vorgesehen ist. Das zweite Bauteil 43 weist ebenfalls auf einer Außenseite ein Gewinde 47 auf. Mittels des Gewindes 47 ist das zweite Bauteil 43 auf der Innenseite 45 des ersten Bauteiles 42 derart befestigbar, dass eine relative axiale Lageänderung des zweiten Bauteiles 43 gegenüber dem ersten Bauteil 42 möglich ist. Zur Abdichtung der Gewindeverbindung 46,47 ist zwischen den beiden Bauteilen 42,43 ein Dichtring 50 vorgesehen.

An einer Innenseite 48 des zweiten Bauteiles 43 ist das Dichtungselement 37 zur Abdichtung des Steuergehäuses 11 angeformt und eine Seitenfläche 49, welche wie die gemäß Fig. 1 beschriebene Stufe 33 von dem Werkstoff des Dichtungselementes 37 in einer dünnen Schicht bedeckt ist, dient in dieser Ausführungsform als Anlagefläche für das Querglied 35.

Die axiale Lageänderung des zweiten Bauteiles 43 dient der Einstellung der Position der Anlagefläche für das Querglied 35. Dadurch können beispielsweise Leerwege des Hauptbremszylinders reduziert werden.

Zur Befestigung des Faltenbalges 40 an dem Kunststoffgehäuseteil 16 verfügt das erste Bauteil 42 am Ende des zylindrischen Abschnittes 44 über einen umlaufenden Bund 51, wobei der umlaufende Bund 41 des Faltenbalges 40 diesen umgreift.

### Bezugszeichenliste

- 1: Gehäusemodul
- 2: Gehäusehalbschale
- 3: Gehäusehalbschale
- 4: Bewegliche Wand
- 5: Unterdruckkammer
- 6: Arbeitskammer
- 7: Membranteller
- 8: Membran
- 9: Betätigungsstange
- 10: Steuerventil
- 11: Steuergehäuse
- 12: Dichtsitz
- 13: Dichtsitz
- 14: Ventilkörper
- 15: Metallgehäuseteil
- 16: Kunststoffgehäuseteil
- 17: Vorsprung
- 18: Ende
- 19: Zuganker
- 20: Ende
- 21: Ende
- 22: Bund
- 23: Ausnehmung
- 24: Dichtelement
- 25: Ausnehmung
- 26: Innenseite
- 27: Abschnitt
- 28: Vierkantfläche
- 29: Dichtung
- 30: Dichtung
- 31: Zylindrischer Abschnitt
- 32: Zylindrischer Abschnitt
- 33: Stufe
- 34: Innenseite
- 35: Querglied
- 36: Ventilkolben
- 37: Dichtungselement
- 38: Außenseite
- 39: Umlaufende Nut
- 40: Faltenbalg
- 41: Umlaufender Bund
- 42: Erstes Bauteil
- 43: Zweites Bauteil
- 44: Zylindrischer Abschnitt
- 45: Innenseite
- 46: Gewindeabschnitt
- 47: Gewinde
- 48: Innenseite
- 49: Seitenfläche
- 50: Dichtring
- 51: Umlaufender Bund

- D1: Ester Innendurchmesser
- D2: Zeiter Innendurchmesser

## Patentansprüche

1. Gehäusemodul (1) für einen Bremskraftverstärker umfassend zwei Gehäusehalbschalen (2,3) zur Aufnahme einer beweglichen Wand (4), welche einen Innenraum des Bremskraftverstärkers in eine Unterdruckkammer (5) und eine Arbeitskammer (6) unterteilt, sowie zur Aufnahme eines Steuergehäuses (11), in dem ein eine auf die bewegliche Wand (4) einwirkende Druckdifferenz steuerendes, mittels einer Betätigungsstange (9) betätigbares Steuerventil (10) angeordnet ist, das aus zwei konzentrisch zueinander angeordneten Dichtsitzen (12,13) sowie einem elastisch verformbaren Ventilkörper (14) besteht, **dadurch gekennzeichnet, dass** die dem Steuerventil (10) zugewandte Gehäusehalbschale (3) aus mehreren Bauteilen unter Verwendung von wenigstens einem Metallgehäuseteil (15) sowie wenigstens einem Kunststoffgehäuseteil (16) besteht, wobei an das Kunststoffgehäuseteil (16) ein Dichtungselement (37) zur Abdichtung des Steuergehäuses (11) angeformt ist.

2. Gehäusemodul (1) nach Anspruch 1, **dadurch gekennzeichnet, dass** das Kunststoffgehäuseteil (16) und das Metallgehäuseteil (15) mittels einer Bajonettverbindung miteinander verbindbar sind.

3. Gehäusemodul (1) nach Anspruch 2, **dadurch gekennzeichnet, dass** an das Kunststoffgehäuseteil (16) zur Abdichtung gegen das Metallgehäuseteil (15) eine Dichtung (29) angeformt ist.

4. Gehäusemodul (1) nach Anspruch 3, **dadurch gekennzeichnet, dass** an das Kunststoffgehäuseteil (16) zur Abdichtung gegen eine fahrzeugfeste Wand eines Kraftfahrzeuges eine Dichtung (30) angeformt ist.

5. Gehäusemodul (1) nach Anspruch 4, **dadurch gekennzeichnet, dass** an dem Kunststoffgehäuseteil (16) eine Anlagefläche für ein Querglied (35) vorgesehen ist, welches die axiale Beweglichkeit eines mit der Betätigungsstange (9) verbundenen Ventilkolbens (36) gegenüber dem Steuergehäuse (11) begrenzt.

6. Gehäusemodul (1) nach Anspruch 5, **dadurch gekennzeichnet, dass** das Kunststoffgehäuseteil (16) einen ersten zylindrischen Abschnitt (31) mit einem ersten Innendurchmesser (D1) sowie einen zweiten zylindrischen Abschnitt (32) mit einem zweiten Innendurchmesser (D2) aufweist, wobei der erste Innendurchmesser (D1) größer als der zweite Innendurchmesser (D2) und **dadurch** auf einer Innenseite (34) des Kunststoffgehäuseteiles (16) eine umlaufende Stufe (33) ausgebildet ist, welche als Anschlagfläche für das Querglied (35) dient.

7. Gehäusemodul (1) nach Anspruch 6, **dadurch gekennzeichnet, dass** das Dichtungselement (37) an der Innenseite (34) des Kunststoffgehäuseteiles (16) im Bereich des zweiten zylindrischen Abschnittes (32) vorgesehen ist.

8. Gehäusemodul (1) nach Anspruch 7, **dadurch gekennzeichnet, dass** der Werkstoff des Dichtungselementes (37) die umlaufende Stufe (33) bedeckt.

9. Gehäusemodul (1) nach einem der Ansprüche 5 bis 8, **dadurch gekennzeichnet, dass** das Kunststoffgehäuseteil (16) ein erstes Bauteil (42) zur Verbindung mit dem Metallgehäuseteil (15) und ein zweites Bauteil (43) aufweist, wobei das Dichtungselement (37) zur Abdichtung des Steuergehäuses (11) und die Anschlagfläche an dem zweiten Bauteil (43) vorgesehen sind und das zweite Bauteil (43) derart an dem ersten Bauteil (42) befestigbar ist, dass eine relative axiale Lageänderung des zweiten Bauteiles (43) in Bezug auf das erste Bauteil (42) möglich ist.

10. Gehäusemodul (1) nach Anspruch 1, wobei der Bremskraftverstärker wenigstens einen Zuganker (19) aufweist, dessen aus dem Gehäusemodul (1) hervorstehende Enden (20,21) jeweils einen Befestigungsabschnitt zur Verbindung des Bremskraftverstärkers mit einem Hauptbremszylinder und einer fahrzeugfesten Wand eines Kraftfahrzeuges aufweist, **dadurch gekennzeichnet, dass** ein Ende (20) des Zugankers (19) zur Verdrehsicherung.des Zugankers (19) und zur Sicherung des Kunststoffgehäuseteiles (16) das Metallgehäuseteil (15) sowie das Kunststoffgehäuseteil (16) durchgreift.

11. Gehäusemodul (1) nach einem der vorangegangenen Ansprüche, **dadurch gekennzeichnet, dass** ein Faltenbalg (40), welcher einen aus dem Gehäusemodul (1) herausragenden Teil des Steuergehäuses (11) umgibt, an einer umlaufenden Nut (39) oder einem umlaufenden Bund (51) des Kunststoffgehäuseteiles (16) befestigbar ist.

12. Gehäusemodul (1) nach Anspruch 11, **dadurch gekennzeichnet, dass** der Faltenbalg (40) und das Kunststoffgehäuseteil (16) einstückig ausgebildet sind.

## Claims

1. Housing module (1) for a brake booster comprising two housing shells (2, 3) for accommodating a movable wall (4) which subdivides an interior space of the brake booster into a low-pressure chamber (5) and a working chamber (6), and for accommodating a control housing (11) in which a control valve (10) is arranged which controls a pressure difference acting on the movable wall (4) and is operable by means of an actuating rod (9), the said control valve being comprised of two sealing seats (12, 13) which are arranged concentrically to one another and of an elastically deformable valve body (14),
**characterized in that** the housing shell (3) facing the control valve (10) is composed of several components, using at least one metal housing part (15) and at least one plastic housing part (16), with a sealing element (37) for sealing the control housing (11) being shaped on the plastic housing part (16).

2. Housing module (1) as claimed in claim 1,
**characterized in that** the plastic housing part (16) and the metal housing part (15) are connectible to each other by means of a bayonet-type twist lock arrangement.

3. Housing module (1) as claimed in claim 2,
**characterized in that** a seal (29) is shaped on the plastic housing part (16) as a sealing with respect to the metal housing part (15).

4. Housing module (1) as claimed in claim 3,
**characterized in that** a seal (30) is shaped on the plastic housing part (16) as a sealing with respect to a wall on a motor vehicle.

5. Housing module (1) as claimed in claim 4,
**characterized in that** the plastic housing part (16) has an abutment surface for a transverse member (35), which limits the axial movability of a valve piston (36) connected to the actuating rod (9) with respect to the control housing (11).

6. Housing module (1) as claimed in claim 5,
**characterized in that** the plastic housing part (16) has a first cylindrical portion (31) with a first internal diameter (D1) and a second cylindrical portion (32) with a second internal diameter (D2), with the first internal diameter (D1) being larger than the second internal diameter (D2), and consequently a circumferential step (33) is provided on an inside surface (34) of the plastic housing part (16) that is used as an abutment surface for the transverse member (35).

7. Housing module (1) as claimed in claim 6,
**characterized in that** the sealing element (37) is provided on the inside surface (34) of the plastic housing part (16) in the area of the second cylindrical portion (32).

8. Housing module (1) as claimed in claim 7,
**characterized in that** the material of the sealing element (37) covers the circumferential step (33).

9. Housing module (1) as claimed in any one of claims 5 to 8,
**characterized in that** the plastic housing part (16) includes a first component (42) for a connection to the metal housing part (15) and a second component (43), with the sealing element (37) for sealing the control housing (11) and the abutment surface being provided on the second component (43), and the second component (43) can be fastened to the first component (42) in such a fashion as to allow a relative axial change in position of the second component (43) with respect to the first component (42).

10. Housing module (1) as claimed in claim 1, wherein the brake booster includes at least one tie rod (19) having ends (20, 21) that project from the housing module (1) and include in each case an attaching portion for coupling the brake booster to a master brake cylinder and to a wall on a motor vehicle,
**characterized in that** one end (20) of the tie rod (19) extends through the metal housing part (15) and the plastic housing part (16) for an anti-rotation mechanism of the tie rod (19) and for securing the plastic housing part (16) in position.

11. Housing module (1) as claimed in any one of the preceding claims,
**characterized in that** a pleated bellows (40), which encompasses a part of the control housing (11) projecting from the housing module (1), can be attached at a circumferential groove (39) or a circumferential bead (51) of the plastic housing part (16).

12. Housing module (1) as claimed in claim 11,
**characterized in that** the pleated bellows (40) and the plastic housing part (16) have an integral design.

## Revendications

1. Module de boîtier (1) pour un servofrein comprenant deux demi-coques de boîtier (2, 3) pour recevoir une paroi mobile (4) qui divise un volume intérieur du servofrein en une chambre à dépression (5) et une chambre de travail (6), ainsi que pour recevoir un boîtier de commande (11) dans lequel est disposée une soupape de commande (10) commandant une différence de pression agissant sur la paroi mobile (4) et pouvant être actionnée au moyen d'une tige d'actionnement (9), laquelle soupape de commande est constituée de deux sièges d'étanchéité (12, 13) disposés concentriquement l'un à l'autre ainsi que d'un corps de soupape (14) déformable élastiquement, **caractérisé en ce que** la demi-coque de boîtier (3), tournée vers la soupape de commande (10), est constituée de plusieurs composants avec utilisation d'au moins une partie de boîtier en métal (15) ainsi que d'au moins une partie de boîtier en matière plastique (16), un élément d'étanchéité (37) étant formé sur la partie de boîtier en matière plastique (16) pour l'étanchéité du boîtier de commande (11).

2. Module de boîtier (1) selon la revendication 1, **caractérisé en ce que** la partie de boîtier en matière plastique (16) et la partie de boîtier en métal (15) peuvent être reliées l'une à l'autre au moyen d'une liaison à baïonnette.

3. Module de boîtier (1) selon la revendication 2, **caractérisé en ce qu'**une garniture d'étanchéité (29) est formée sur la partie de boîtier en matière plastique (16) pour l'étanchéité par rapport à la partie de boîtier en métal (15).

4. Module de boîtier (1) selon la revendication 3, **caractérisé en ce qu'**une garniture d'étanchéité (30) est formée sur la partie de boîtier en matière plastique (16) pour l'étanchéité par rapport à une paroi d'un véhicule automobile, solidaire de celui-ci.

5. Module de boîtier (1) selon la revendication 4, **caractérisé en ce que** sur la partie de boîtier en matière plastique (16) est prévue une surface de contact pour un organe transversal (35) qui limite la mobilité axiale d'un piston de soupape (36), relié à la tige d'actionnement (9), par rapport au boîtier de commande (11).

6. Module de boîtier (1) selon la revendication 5, **caractérisé en ce que** la partie de boîtier en matière plastique (16) comporte un premier segment cylindrique (31) avec un premier diamètre intérieur (D1) ainsi qu'un second segment cylindrique (32) avec un second diamètre intérieur (D2), le premier diamètre intérieur (D1) étant supérieur au second diamètre intérieur (D2) et de ce fait sur un côté intérieur (34) de la partie de boîtier en matière plastique (16) est réalisé un gradin (33) périphérique qui sert de surface de butée à l'organe transversal (35).

7. Module de boîtier (1) selon la revendication 6, **caractérisé en ce que** l'élément d'étanchéité (37) est prévu sur le côté intérieur (34) de la partie de boîtier en matière plastique (16), dans la zone du second segment cylindrique (32).

8. Module de boîtier (1) selon la revendication 7, **caractérisé en ce que** le matériau de l'élément d'étanchéité (37) recouvre le gradin (33) périphérique.

9. Module de boîtier (1) selon l'une des revendications 5 à 8, **caractérisé en ce que** la partie de boîtier en matière plastique (16) comporte un premier composant (42) pour la liaison avec la partie de boîtier en métal (15) et un second composant (43), l'élément d'étanchéité (37) pour l'étanchéité du boîtier de commande (11) et la surface de butée étant prévus sur le second composant (43), et le second composant (43) pouvant être fixé sur le premier composant (42) de manière à permettre une variation axiale relative de la position du second composant (43) par rapport au premier composant (42).

10. Module de boîtier (1) selon la revendication 1, dans lequel le servofrein comporte au moins un tirant (19) dont les extrémités (20, 21), ressortant du module de boîtier (1), comportent chacune un segment de fixation pour la liaison du servofrein à un cylindre de frein principal et à une paroi d'un véhicule automobile, solidaire de celui-ci, **caractérisé en ce qu'**une extrémité (20) du tirant (19) traverse la partie de boîtier en métal (15) ainsi que la partie de boîtier en matière plastique (16), pour le blocage en rotation du tirant (19) et pour assurer la partie de boîtier en matière plastique (16).

11. Module de boîtier (1) selon l'une des revendications précédentes, **caractérisé en ce qu'**un soufflet (40), qui entoure une partie, ressortant du module de boîtier (1), du boîtier de commande (11), peut être fixé à une rainure (39) périphérique ou à un épaulement (51) périphérique de la partie de boîtier en matière plastique (16).

12. Module de boîtier (1) selon la revendication 11, **caractérisé en ce que** le soufflet (40) et la partie de boîtier en matière plastique (16) sont réalisés d'un seul tenant.
